# EUROPEAN PATENT APPLICATION

(11) **EP 3 508 909 A1**
(43) Date of publication of application: **10.07.2019**
(21) Application number: 17777763.8
(22) Date of filing: 19.06.2017
(51) Int. Cl.: G02B 27/22, G02B 5/124, G02B 5/30

(54) **OPTICAL IMAGING APPARATUS**

(30) Priority: 31.08.2016 JP 2016169680; 25.11.2016 JP 2016228629
(71) Applicant: Scivax Corporation, Kawasaki-shi, Kanagawa 212-0032 (JP)
(72) Inventor: NAWATA, Akifumi, Kawasaki-shi, Kanagawa 212-0032 (JP); AWAYA, Nobuyoshi, Kawasaki-shi, Kanagawa 212-0032 (JP); TANAKA, Satoru, Kawasaki-shi, Kanagawa 212-0032 (JP)
(74) Representative: Gille Hrabal
(86) International application number: PCT/JP2017/022447
(87) International publication number: WO 2018/042830

(57) **Abstract**

Provided is an optical image formation apparatus which has a high brightness of an actual image, easy for manufacturing, and reduces costs. This optical image formation apparatus mainly includes a polarizer 2 causing P polarization light to pass through, and reflecting S polarization light, a phase difference element 3 converting either one of or both of the P polarization light having passed through the polarizer 2 or the S polarization light reflected by the polarizer 2 into circular polarization light or elliptical polarization light, and a recursive light reflector 4 recursively reflecting the light having passed through the phase difference element 3.

## Description

### TECHNICAL FIELD

The present disclosure relates to an optical image formation apparatus that forms an actual image in air.

### BACKGROUND ART

Conventionally, optical image formation apparatuses which forms, as an actual image in another space, a projection body, such as an object body or an image are known. For example, there is an optical image formation apparatus which utilizes first and second light control panels each formed by arranging a large number of stripe planar light reflector parts side by side in a transparent flat plate, and vertically to the one surface of the transparent flat plate, and which causes the respective one surfaces of the first and second light control panels to face with each other so as to arrange the planar light reflective parts orthogonal to each other. Such a device causes light from an object body to enter the planar light reflective part of the first light control panel, causes the reflected light by the planar light reflective part to be reflected again by the planar light reflective part of the second light control panel, and forms the actual image of the object body at the opposite side to the optical image formation apparatus.

### CITATION LIST

### PATENT LITERATURES

Patent Document 1: JP 2013-127625 A

### SUMMARY OF INVENTION

### TECHNICAL PROBLEM

However, conventional optical image formation apparatuses do not have the sufficient brightness of the actual image. In addition, since the structure is complex, the manufacturing is difficult, and takes costs.

Accordingly, an objective of the present disclosure is to provide an optical image formation apparatus which has a high brightness of an actual image, and which is easy for manufacturing, and reduces costs.

### SOLUTION TO PROBLEM

In order to accomplish the above objective, an optical image formation apparatus according to the present disclosure forms an actual image of a projection body, and the optical image formation apparatus includes:
a polarizer causing P polarization light to pass through, and reflecting S polarization light;
a phase difference element converting the P polarization light or the S polarization light into circular polarization light or elliptical polarization light; and
a recursive light reflector recursively reflecting the light having passed through the phase difference element.

As for such an optical image formation apparatus, the polarizer is applicable which includes a first plane and a second plane, causes the P polarization light of the light entering from the first plane to pass through, and reflects the S polarization light. In this case, the polarizer may include, on the second plane, reflection suppressing means that suppresses light reflection.

In addition, as for another optical image formation apparatus, the polarizer is applicable which includes a first plane and a second plane, causes the P polarization light of the light entering from the first plane to pass through, and reflects the S polarization light of the light entering from the second plane.

Still further, as for the other optical image formation apparatus:
the polarizer includes a first plane and a second plane, causes the P polarization light of the light entering from the first plane to pass through, reflects the S polarization light, and reflects the S polarization light of the light entering from the second plane;
the phase difference element includes a first phase difference element converting the S polarization light reflected by the polarizer into circular polarization light or elliptical polarization light, and a second phase difference element converting the P polarization light having passed through the polarizer into circular polarization light or elliptical polarization light; and
the recursive light reflector includes a first recursive light reflector recursively reflecting the light having passed through the first phase difference element, and a second recursive light reflector recursively reflecting the light having passed through the second phase difference element.

In those optical image formation apparatuses, it is preferable that the recursive light reflector should utilize reflection by metal. In addition, a polarizer side of the recursive light reflector may be a concaved curved surface. A plurality of pairs of the phase difference element and the recursive light reflector having different angles may be disposed.

The optical image formation apparatus according to the present disclosure may include light projecting means that projects light to the polarizer. In this case, the light projected by the light projecting means may be linear polarization light.

In addition, the optical image formation apparatus according to the present disclosure may include polarizer angle adjusting means rotating the light projecting means and the polarizer relative to each other, and adjusting a polarization direction of the light caused by the polarizer to pass through or reflected.

Still further, optical image formation apparatus according to the present disclosure may include phase difference element angle adjusting means rotating the polarizer and the phase difference element relative to each other, and adjusting a polarization direction of the light to be entered in the phase difference element from the polarizer.

The phase difference element and the recursive light reflector may be formed in a size equal to or greater than a size of at least the polarizer.

An optical image formation apparatus according to the present disclosure includes:
the above optical image formation apparatus that forms an actual image of the projection body; and
the above optical image formation apparatus that forms an actual image of the above actual image.

In this case, the optical image formation apparatus may include light emitting means that emits light to the projection body.

### ADVANTAGEOUS EFFECTS OF INVENTION

### BRIEF DESCRIPTION OF DRAWINGS

FIG. 1 is a plan view illustrating a first optical image formation apparatus according to the present disclosure;
FIG. 2 is a plan view illustrating a second optical image formation apparatus according to the present disclosure;
FIG. 3 is a plan view illustrating a third optical image formation apparatus according to the present disclosure;
FIG. 4 is a perspective view illustrating a polarizer according to the present disclosure;
FIG. 5 is a perspective view illustrating a phase difference element according to the present disclosure;
FIG. 6 is a perspective view illustrating another phase difference element according to the present disclosure;
FIG. 7 is a perspective view illustrating another phase difference element according to the present disclosure;
FIG. 8A is a plan view and FIG. 8B is a perspective view illustrating a recursive light reflector according to the present disclosure;
FIG. 9 is a plan view illustrating a relationship in angle between the polarizer and the recursive light reflector in the optical image formation apparatus according to the present disclosure;
FIG. 10 is a plan view illustrating another optical image formation apparatus according to the present disclosure;
FIG. 11 is a side view illustrating another optical image formation apparatus according to the present disclosure;
FIG. 12 is a plan view illustrating another optical image formation apparatus according to the present disclosure;
FIG. 13 is a plan view illustrating a case in which the actual image of an object body is formed by the optical image formation apparatus according to the present disclosure;
FIG. 14 is a plan view illustrating a case in which the actual image of an object body is formed by two first optical image formation apparatuses;
FIG. 15 is a plan view illustrating a case in which the actual image of an object body is formed by two third optical image formation apparatuses;
FIG. 16 is a diagram illustrating the relationship between the recursive light reflector utilizing total reflection and the polarization state of light;
FIG. 17 is a diagram illustrating the relationship between the recursive light reflector utilizing reflection by metal and the polarization state of light;
FIG. 18 is a plan view for explaining a simulation method.

### DESCRIPTION OF EMBODIMENTS

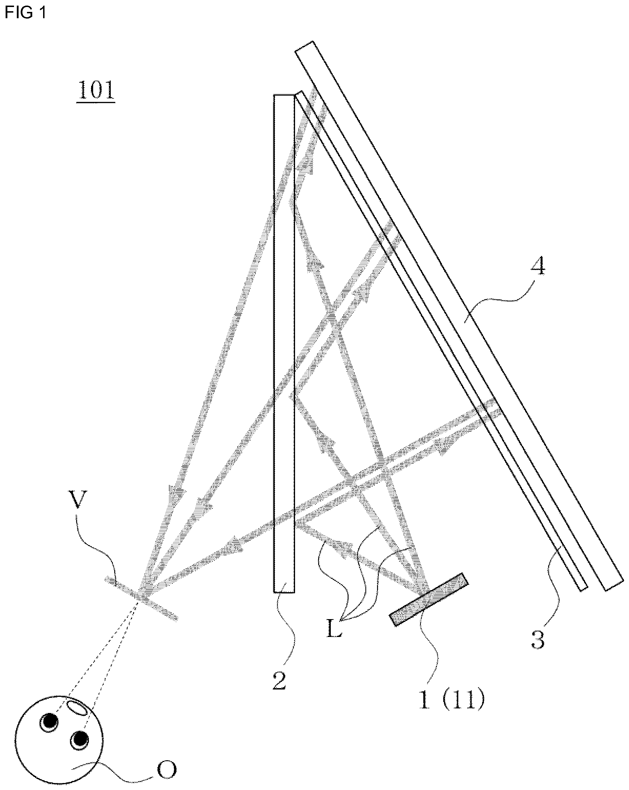

An optical image formation apparatus according to the present disclosure which forms an actual image V in another space by light emitted from a projection body 1 will be described below. The optical image formation apparatus according to the present disclosure mainly includes, as illustrated in FIGS. 1 to 3, a polarizer 2 which allows P polarization light to pass through, but which reflects S polarization light, a phase difference element 3 which converts, into circular polarization light or elliptical polarization light, either one of or both of the P polarization light that has passed through the polarizer 2, and the S polarization light that has been reflected by the polarizer 2, and a recursive light reflector 4 that recursively reflects the light which has passed through the phase difference element 3.

In this case, the P polarization light in this specification means linear polarization light in a polarization axis parallel with a predetermined reference direction, and the S polarization light means linear polarization light in a polarization axis perpendicular to the reference direction. In addition, the projection body 1 is equivalent to an object that emits light, such as a normal body that emits light upon receiving external light, a screen that emits light upon receiving light from a projector, or light projecting means like a display itself that emits light. In addition, the light projecting means also includes the optical image formation apparatus of the present disclosure which emits light that is the actual image.

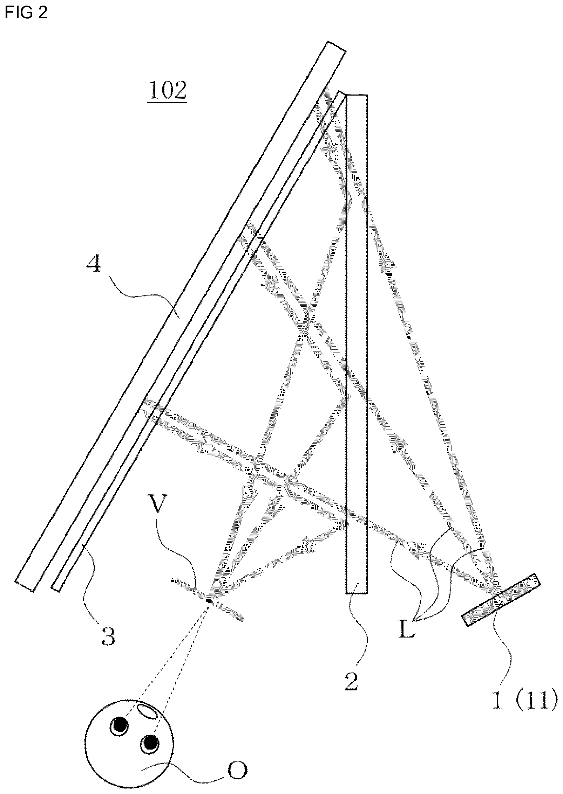

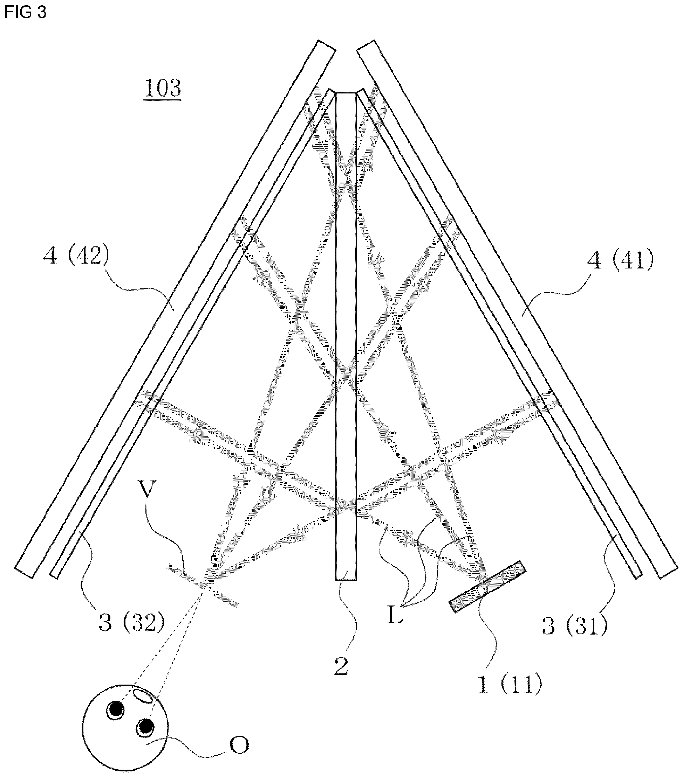

As illustrated in FIG. 1, the optical image formation apparatus according to the present disclosure includes a first optical image formation apparatus 101 having the phase difference element 3 and the recursive light reflector 4 disposed at the projection-body-1 relative to the polarizer 2, and as illustrated in FIG. 2, a second optical image formation apparatus 102 having the phase difference element 3 and the recursive light reflector 4 disposed at the projection-body-1 side relative to the polarizer 2, and as illustrated in FIG. 3, a third optical image formation apparatus 103 having the phase difference element 3 and the recursive light reflector 4 disposed at both sides of the polarizer 2.

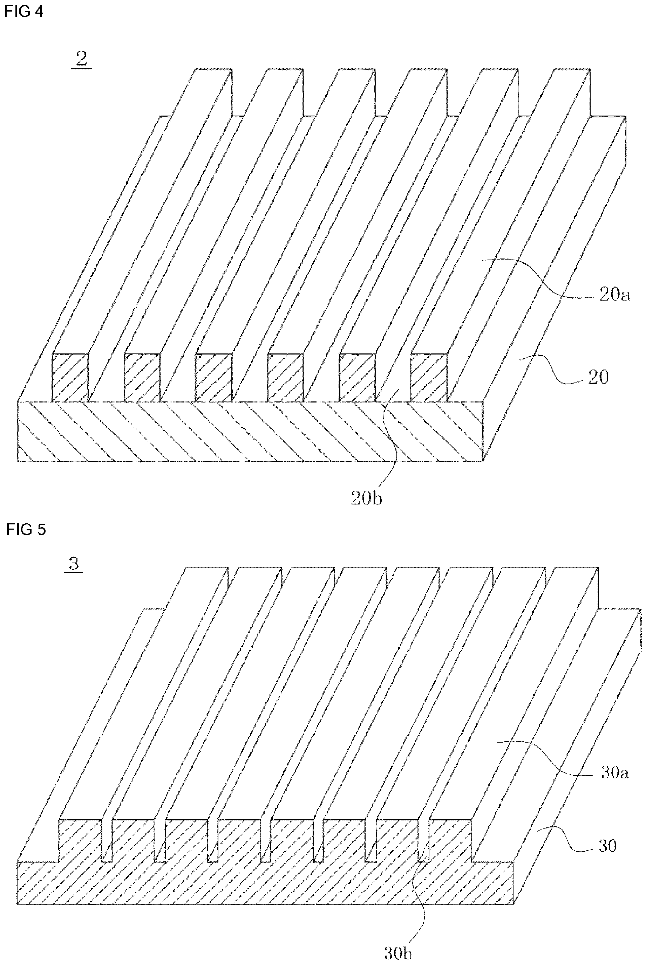

The polarizer 2 includes a first plane at the projection-body-1 side, and a second plane at a side where the actual image V is formed, allows the P polarization light to pass through, but reflects the S polarization light perpendicular to the P polarization light. As for the polarizer 2, conventionally known structure like a wire grid is applicable. For example, as illustrated in FIG. 4, multiple metal lines (convexities 20a) formed in parallel with each other in a shape like a line-and-space on one surface of the base 20 can be applied. In addition, although it is not illustrated, the convexities 20a may employ a laminate-layer structure formed of multiple materials. Still further, it is preferable that the narrower the pitch of the concavo-convex structure is, and the higher the aspect ratios is, the higher the polarizer 2 obtains the optical quenching ratio within a wide wavelength band, in particular, across the short wavelength range. When, for example, an excellent optical quenching ratio is necessary within a visible range of the wavelength between 380 to 800 nm, it is preferable that the pitch of the concavo-convex structure should be 50 to 300 nm, the width of the convexity 20a should be 25 to 200 nm, and the aspect ratio of the convexity 20a should be equal to or greater than 1. In addition, as for the material applied to the convexity 20a of the concavo-convex structure is preferably a material that causes electrons to be excited by light with a wavelength λ. For example, a metal or a metal oxide with a small band gap is excellent, and more specifically, aluminum (Al), silver (Ag), etc., are applicable.

Still further, the polarizer 2 may be formed by filling the dielectric of the base 20 up to between (concavity 20b) the metal lines (convexities 20a). Hence, the strength can be increased or the corrosion of a metal part can be avoided.

Yet still further, although it is not illustrated, the polarizer 2 may include a protection part which covers the surface and which protects the concavo-convex structure. This prevents or suppresses the concavo-convex structure of the polarizer 2 from being damaged or contaminated when in use. The material of the protection part is not limited to any particular kind as long as it can allow desired light to pass through, but for example, inorganic compounds, such as quartz and alkali-free glass, are applicable. In addition, a resin is also applicable. When the protection part is provided, it is preferable that the space (concavity 20b) between the metal lines (convexity 20a) (concavity 20b) should be hollow.

Still further, a half mirror is applicable instead of the polarizer 2. In this case, however, since the amount of light decreases when light enters the half mirror, there is a disadvantage such that the amount of light becomes equal to or smaller than 1/4 by two incident lights. Hence, it is preferable to apply not the half mirror but the polarizer 2 for an optical image formation apparatus.

The phase difference element 3 converts, into the circular polarization light or the elliptical polarization light, the P polarization light or the S polarization light incident via the polarizer. As for the phase difference element 3, a conventionally known technology is applicable. For example, one that utilizes birefringence caused in accordance with the orientation of elongate macromolecule, and one that utilizes birefringence caused by the concavo-convex structure including convexities 30a and concavities 30b formed on a base 30 as illustrated in FIG. 5 are applicable. It is preferable that the ovality after the conversion by the phase difference element 3 should be equal to or greater than 0.6, preferably, equal to or greater than 0.7, and most preferably, equal to or greater than 1. In this case, the ovality means a ratio β/α between a length α of the longer axis of an oval and a length β of the shorter axis when the trajectory of light is projected on a surface perpendicular to the traveling direction of light. When the absolute value of the ovality is equal to or greater than 0.7, the transmissive wave is considerable as circular polarization light within 3 dB. It is unnecessary that the number of the phase difference elements 3 is one, and multiple phase difference elements may be applied to convert, into the circular polarization light or the elliptical polarization light, the P polarization light or the S polarization light which enters from the polarizer.

As long as a phase difference can be given to light which passes through the concavo-convex structure to convert into the circular polarization light or the elliptical polarization light, any phase difference elements 3 are applicable. For example, a line-and-space shape can be formed including the convexities 30a and the concavities 30b with a smaller width than the wavelength λ.

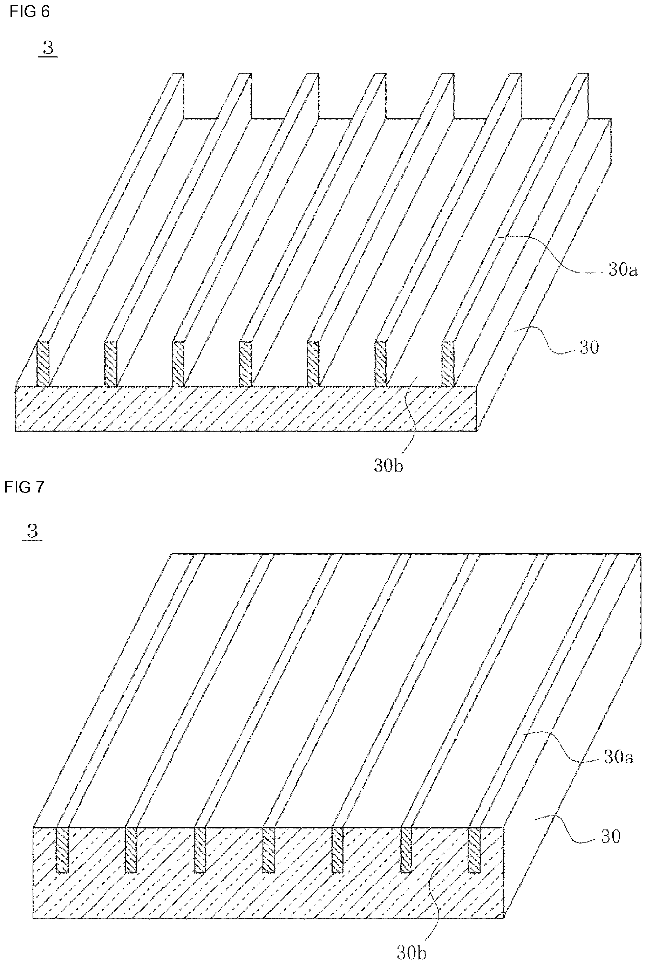

In addition, when the phase difference element 3 utilizes the birefringence caused by the concavo-convex structure, the convexity 30a of the concavo-convex structure may be formed by the same material as that of the base 30 and integrally therewith as illustrated in FIG. 5, and may be formed of a different material from that of the base 30 as illustrated in FIG. 6. Example materials applicable to the convexity 30a of concavo-convex structure are inorganic compounds, such as quartz and alkali-free glass, metals, such as silver, gold, an aluminum, nickel, and copper, and metal oxides, such as silicon dioxide (SiO₂), and aluminum oxide (Al₂O₃). Still further, a resin may be applied. It is preferable that such a material should not cause electrons to be excited by light with the wavelength λ, which corresponds to metal oxides, such such as silicon dioxide (SiO₂) and aluminum oxide (Al₂O₃).

Yet still further, as an example case in which the concavo-convex structure is formed of a different material from that of the base 30, a case will be explained in which the phase difference element 3 formed of multiple metal structures (convexities 30a) is formed on the base 30 formed of a dielectric. As illustrated in FIG. 6, the concavo-convex structure of the phase difference element 3 is in a line-and-space shape which has linear metal structures (convexities 30a) arranged in parallel with each other and at multiple cycles. The metal structure is formed so as to have a smaller width than the wavelength λ of light. In addition, it is preferable that the cross-section of the metal structure should cause the absolute value of the ovality of transmissive wave to be equal to or greater than 0.7 when light with the predetermined wavelength which is linear polarization light enters in such a way that the polarization direction forms an angle of 45 degrees relative to the linear direction of the metal structure. Specific cross-sectional shapes applicable are a square, a triangle, and a trapezoid.

Example metals are silver, gold, aluminum, nickel, copper, etc. Needless to say, the metal is not limited to these kinds.

A phase difference can be given to light when the light passes through the space between the metal structures formed as described above.

In addition, it is preferable that a pitch P of the metal structures should cause the absolute value of the ovality of the transmissive wave to be equal to or greater than 0.7 when light that is linear polarization light enters in such a way that the polarization direction forms an angle of 45 degrees relative to the linear direction of the metal structure.

Still further, it is preferable that the width and height of the metal structure should cause the absolute value of the ovality of the transmissive wave to be equal to or greater than 0.7 when light that is linear polarization light enters in such a way that the polarization direction forms an angle of 45 degrees relative to the linear direction of the metal structure. The permeability of light can be adjusted based on the width and height of the metal structure.

Yet still further, as illustrated in FIG. 7, as for the phase difference element 3, the dielectric of the base 30 may be filled up to between (concavities 30b) the metal structures (convexities 30a) . This enhances the strength and prevents a metal part from being corroded.

In addition, although it is not illustrated in the figure, the phase difference element 3 may further include a protection part which covers the surface and protects the concavo-convex structure. This prevents or suppresses the concavo-convex structure of the phase difference element 3 from being damaged or contaminated when in use. The material of the protection part is not limited to any particular kind as long as it can allow desired light to pass through, but for example, inorganic compounds, such as quartz and alkali-free glass, are applicable. In addition, a resin is also applicable.

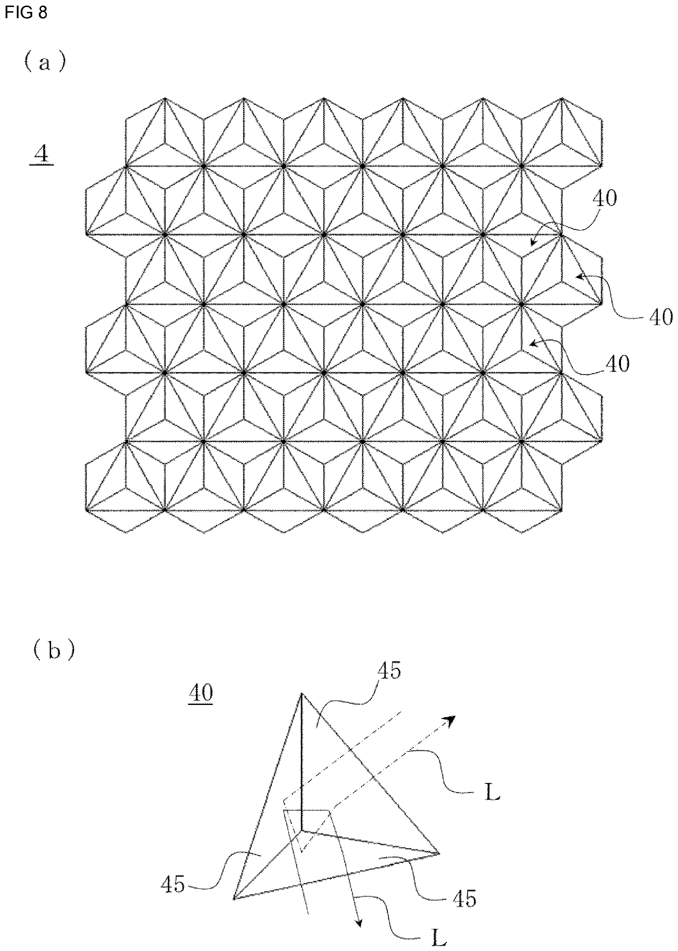

The recursive light reflector 4 is for recursive reflection of light which has passed through the phase difference element 3. Recursive reflection in this case means that the incident light reflects in the same direction as the incident direction. As for the recursive light reflector 4, a conventionally known technology is applicable. For example, as illustrated in FIG. 8A, multiple recursive reflective unit elements 40 in a corner cube shape having three mirror planes 45 combined at right angle so as to directed inwardly relative to each other are applicable. In this case, as illustrated in FIG. 8B, incident light 42 is reflected in sequence by the three mirror planes 45, and light L is eventually reflected in parallel with the incident light.

The size of the recursive reflective unit element 40 contributes to the resolution of the actual image V to be formed. Since the point light source of the projection body forms an image spread substantially twice as much as the size of the recursive reflective unit device 40, the small recursive reflective unit element is preferable. When, however, the size of the recursive reflective unit element becomes too small, the influence of diffraction becomes remarkable, deteriorating the resolution. Accordingly, the size may be adjusted in accordance with those facts as appropriate. When, for example, an image is observed within a short distance like within 1 m, the recursive reflective unit element having a size of substantially 50 to 300 µm is suitable, and when the image is observed within a long distance like equal to or greater than 1 m, the size may be increased in accordance with the distance, and the size of 300 to 3000 µm is appropriate.

In addition, the recursive light reflector 4 applied to the optical image formation apparatus of the present disclosure has two types which utilize total reflection and which utilize reflection by metal.

As for a recursive light reflector that utilizes total reflection, for example, multiple recursive reflection unit elements 40 having the internal side of the above corner cube formed of a medium with a large refractive index, and having the external side formed of a medium with a small refractive index, and having the mirror plane 45 formed at the boundary between those sides may be applied. In the medium with a large refractive index, the side at which light enters (the side where no corner cube is formed) may have a constant thickness, but it is preferable to form the surface thereof (incident plane of light) to be sufficiently smooth so as not to cause diffuse diffraction of light. As for a specific recursive light reflector, the one surface of a plate formed of glass (SiO₂) may be a plane, while the other surface may be the concavo-convex structure on which the multiple recursive reflective unit elements 40 in a corner cube shape are disposed. This causes the incident light from the plane side of the glass plate to be totally reflected three times by the mirror plane 45 that is a boundary between the glass forming the recursive reflection unit element 40 and air, thus being reflected in parallel with the incident light.

Conversely, as for the recursive light reflector that utilizes reflection by metal, for example, the above recursive light reflector for total reflection may be formed of a transparent material to applied light, e.g., glass (SiO₂), and a metal like silver may be vapor-deposited on the surface of the concavo-convex structure. Incident light from the transparent material side is reflected three times by the mirror plane 45 that is a boundary between glass and metal, thus being reflected in parallel with the incident light.

In addition, the concavo-convex structure having the multiple recursive reflective unit elements 40 in a corner cube shape disposed on the surface of a plate formed of metal like silver may be directly formed without using a transparent material. In this case, the incident light to the metal plate is also reflected three times by the mirror plane 45 that is a boundary between air of the recursive reflection unit element 40 and the metal, thus being reflected in parallel with the incident light.

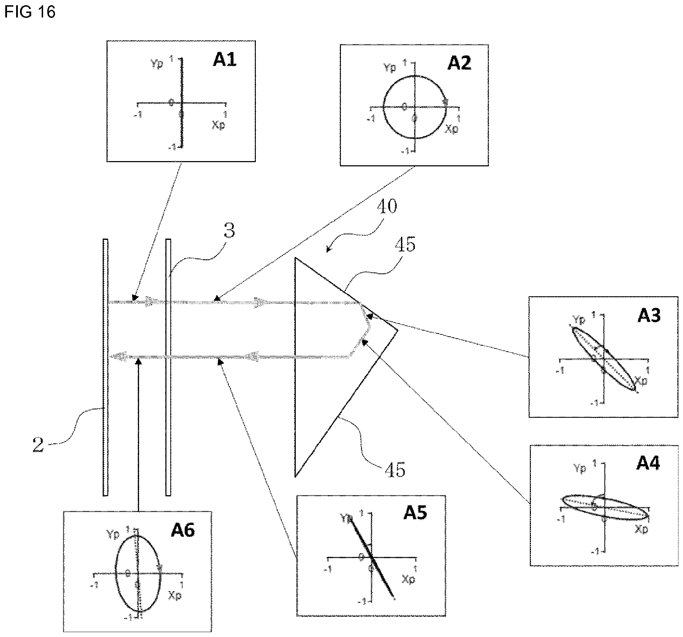

In the case of the recursive light reflector that utilizes total reflection, as illustrated in FIG. 16, P polarization light A1 which has passed through the polarizer 2 causes a slight phase shift called Goos-Haenchen shift at the boundary plane of reflection every time reflected by the mirror plane 45 after converted into circular polarization light A2 by the phase difference element 3, becoming elliptical polarization light A3, elliptical polarization light A4, and elliptical polarization light A5 having the ovality and the inclination of oval, etc., changed. Consequently, the elliptical polarization light A5 passes through the phase difference element 3, becomes the elliptical polarization light A6, and enters in the polarizer 2. Hence, although the S polarization light component of the elliptical polarization light A6 is available as reflected light, the light with the P polarization light component passes through the polarizer 2 again, and is wasted.

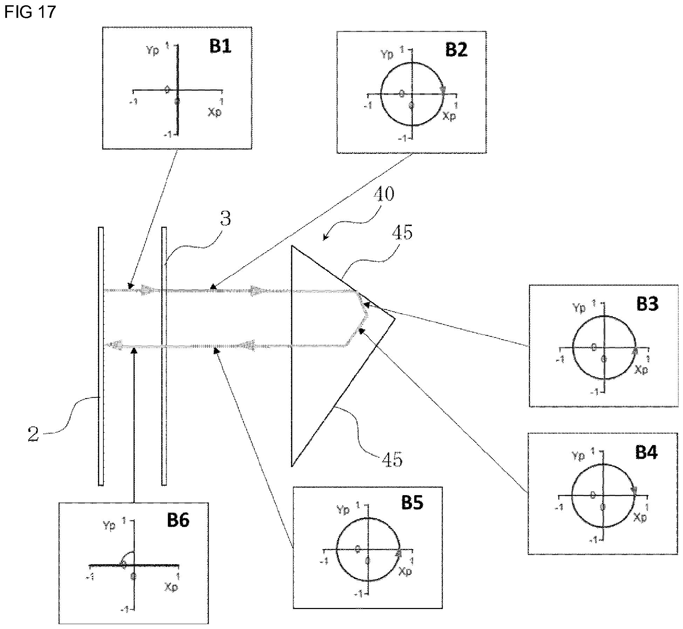

In contrast, in the case of the recursive light reflector that utilizes reflection by metal, no Goos-Haenchen shift occurs. Hence, as illustrated in FIG. 17, P polarization light B1 which has passed through the polarizer 2 becomes circular polarization light B3 by the phase difference element 3, and every time reflected by the mirror plane 45, becomes circular polarization light B3, circular polarization light B4, and circular polarization light B5 having only the rotation direction of circular polarization in reverse direction. That is, by three-times reflection, the circular polarization light B2 becomes the circular polarization light B5 in reverse rotation, and enters the phase difference element 3 again. In this case, the circular polarization light B5 is converted into S polarization light B6 by the phase difference element 3, and enters the polarizer 2. Hence, most light components can be utilized as reflected light.

As explained above, in view of improvement of the brightness by efficiently utilizing light from projection body 1, it is preferable to apply the recursive light reflector 4 that utilizes reflection by metal rather than the recursive light reflector that utilizes total reflection.

Although the explanation has been given of a case in which the polarization state of the P polarization light that has passed through the polarizer 2 is changed and the S polarization light reflected by this polarizer 2 among the returned light is utilized, the same result can be obtained in a case in which the polarization state of the S polarization light reflected by the polarizer 2 is changed and the P polarization light which has passed through the polarizer 2 among the returned light to the polarizer 2 again is utilized.

In addition, although it is not illustrated, as for the recursive light reflector, multiple spherical beads capable of recursively reflect incident light and disposed may be applied.

Next, the principle of the optical image formation apparatus will be described with reference to FIGS. 1 to 3 together with the positional relationship relative to the polarizer 2, the phase difference element 3, and the recursive light reflector 4. Note that the arrow in the figure indicates the trajectory of light L.

As illustrated in FIG. 1, the first optical image formation apparatus 101 of the present disclosure has the phase difference element 3 and the recursive light reflector 4 disposed at the projection body-1 side relative to the polarizer 2.

According to the first optical image formation apparatus 101, the S polarization light of the emitted light L from the projection body 1 is reflected by the first plane of the polarizer 2. The phase difference element 3 is disposed in a position capable of receiving the reflected S polarization light by the polarizer 2, and converts the incident S polarization light into circular polarization light or elliptical polarization light. The recursive light reflector 4 is disposed in a position capable of receiving light that has passed through the phase difference element 3, and performs recursive reflection of this light. At this time, when the recursive light reflector 4 utilizes reflection by metal, the rotation direction of the reflected circular polarization light (or elliptical polarization light) relative to the traveling direction becomes the reverse rotation of the rotation direction of the circular polarization light (or elliptical polarization light) prior to the reflection relative to the traveling direction. When this circular polarization light (or elliptical polarization light) enters the phase difference element 3 again, since the rotation direction is reverse, this entering light is converted into the P polarization (or linear polarization light that approximates the P polarization light). This P polarization light can pass through the polarizer 2. Thus, the light emitted from the projection body 1 is imaged at the symmetrical position with the polarizer 2 being as a center, and thus the actual image V of the projection body 1 can be formed in air.

Note that the first optical image formation apparatus 101 may include reflection suppressing means that suppresses reflection of light on the second plane of the polarizer 2. This suppresses reflection of light coming from the second-plane side of the polarizer 2, it becomes possible to prevent unnecessary light other than the actual image V from entering the eye of the viewer.

As illustrated in FIG. 2, the second optical image formation apparatus 102 according to the present disclosure has the phase difference element 3 and the recursive light reflector 4 disposed at the opposite side to the projection body 1 relative to the polarizer 2.

According to the second optical image formation apparatus 102, the P polarization light of the light L emitted from the projection body 1 passes through the polarizer 2. The phase difference element 3 is disposed at the position capable of receiving the P polarization light that has passed through the polarizer 2, and converts the incident P polarization light into circular polarization light or elliptical polarization light. The recursive light reflector 4 is disposed at the position capable of receiving the light that has passed through the phase difference element 3, and causes this light to be recursively reflected. At this time, when the recursive light reflector 4 utilizes reflection by metal, the rotation direction of the reflected circular polarization light (or elliptical polarization light) relative to the traveling direction becomes reverse rotation to the rotation direction of the circular polarization light (or elliptical polarization light) prior to reflection in the traveling direction. When this circular polarization light (or elliptical polarization light) enters again the phase difference element 3, since the rotation direction is reverse, the polarization light is converted into the S polarization light (or linear polarization light that approximates the S polarization light). The S polarization light is reflected by the second plane of the polarizer 2. Thus, the light emitted from the projection body 1 is imaged at the symmetrical position symmetrical relative with the polarizer 2 being as a center, and the actual image V can be formed in air.

The second optical image formation apparatus 102 needs to dispose the phase difference element 3 and the recursive light reflector 4 at the actual image-V side to be formed. When, however, according to the first optical image formation apparatus 101, the projection body 1 is present between the polarizer 2, the phase difference element 3 and the recursive light reflector 4, the reflected light by the polarizer 2 has a part blocked by the projection body 1 itself, but the second optical image formation apparatus 102 has an advantage such that such a blocking does not occur.

In the first optical image formation apparatus 101 and the second optical image formation apparatus 102, light projecting means, such as a display which projects an ordinary object and light, can be applied as the projection body. When light projecting means 11 is a display which projects only linear polarization light, according to the first optical image formation apparatus 101, either one of or both of the light projecting means 11 and the polarizer 2 may be rotated so as to align the angle of linear polarization light emitted from the light projecting means 11 emits with the angle of the S polarization light reflected by the polarizer 2, all the light that enter the polarizer 2 from the light projecting means 11 can be reflected. In addition, according to the second optical image formation apparatus 102, either one of or both of the light projecting means 11 and the polarizer 2 may be rotated so as to align the angle of the linear polarization light emitted from the light projecting means 11 with the angle of the P polarization light passing through the polarizer 2, all the light that enter the polarizer 2 from the light projecting means 11 can be caused to pass through. Consequently, the light emitted from the light projecting means 11 can be utilized without a waste, and the brightness of the actual image V to be formed can be improved.

As for the adjustment of the angle, the light projecting means 11 and the polarizer 2 may be rotated relative to each other, or polarizer angle adjusting means that adjusts the polarization direction of light caused by the polarizer 2 to pass through or reflected may be applied. For example, projection-side rotating means that can rotate the angle of linear polarization light emitted by the light projecting means 11, or polarizer rotating means that can rotate the angle of linear polarization light caused by the polarizer 2 to pass through or reflect.

As illustrated in FIG. 3, the third optical image formation apparatus 103 according to the present disclosure has the phase difference element 3 and the recursive light reflector 4 disposed at both sides of the polarizer 2.

According to the third optical image formation apparatus 103, the S polarization light of the light emitted from the projection body 1 is reflected by the polarizer 2. A phase difference element 31 is disposed at the position capable of receiving the S polarization light reflected by the polarizer 2, and converts the incident S polarization light into circular polarization light or elliptical polarization light. A recursive light reflector 41 is disposed at the position capable of receiving the light which has passed through a phase difference element 31, and this light is recursively reflected. At this time, when the recursive light reflector 4 utilizes reflection by metal, the rotation direction of the reflected circular polarization light (or elliptical polarization light) relative to the traveling direction becomes reverse rotation to the rotation direction of the circular polarization light (or elliptical polarization light) prior to reflection relative to the traveling direction. When this circular polarization light (or elliptical polarization light) enters again the phase difference element 31, since the rotation direction is reverse, such a polarization light is converted into the P polarization light (or linear polarization light that approximates the P polarization light). The P polarization light can pass through the polarizer 2. Thus, the light emitted from the projection body 1 is imaged at the symmetrical position with the polarizer 2 being as a center, and the actual image V of the projection body 1 can be formed in air. In contrast, the P polarization light of the light emitted from the projection body 1 passes through the polarizer 2. A phase difference element 32 is disposed at the position capable of receiving the P polarization light which has passed through the polarizer 2, and converts the incident P polarization light into circular polarization light or elliptical polarization light. A recursive light reflector 42 is disposed at the position capable of receiving the light which has passed through the phase difference element 32, and causes this light to be recursively reflected. At this time, when the recursive light reflector 4 utilizes reflection by metal, the rotation direction of the reflected circular polarization light (or elliptical polarization light) relative to the traveling direction becomes reverse rotation to the rotation direction of the circular polarization light (or elliptical polarization light) prior to reflection relative to the traveling direction. When this circular polarization light (or elliptical polarization light) enters again the phase difference element 32, since the rotation direction is reverse, such a polarization light is converted into the S polarization light (or linear polarization light that approximates the S polarization light). This S polarization light is reflected by the polarizer 2. Thus, the light emitted from the projection body 1 is imaged at the symmetrical position with the polarizer 2 being as a center, and the actual image V can be formed in air.

As described above, since the third optical image formation apparatus 103 utilizes both the P polarization light and the S polarization light of light emitted from the projection body 1, the light emitted from the projection body 1 can be further utilized without a waste. Consequently, in comparison with the first optical image formation apparatus 101 and the second optical image formation apparatus 102, the brightness of the actual image V to be formed can be further improved. In addition, the first optical image formation apparatus 101 and the second optical image formation apparatus 102 need to, when utilizing the light projecting means 11 that projects only linear polarization light, rotate the light projecting means 11 and the polarizer 2 relative to each other and adjust the polarization direction of light caused by the polarizer 2 to pass through or to be reflected in order to utilize the light emitted from the light projecting means 11 without a waste. In contrast, the third optical image formation apparatus 103 utilizes the light that passes through the polarizer 2 and the light that is reflected, there is an advantage such that such an adjustment is unnecessary.

A phase difference element angle adjusting means that rotates the polarizer 2 and the phase difference element 3 relative to each other, and adjusts the polarization direction of light that enters the phase difference element 3 from the polarizer 2 may be provided. This enables an adjustment of the phase difference to be given to the light which enters the phase difference element.

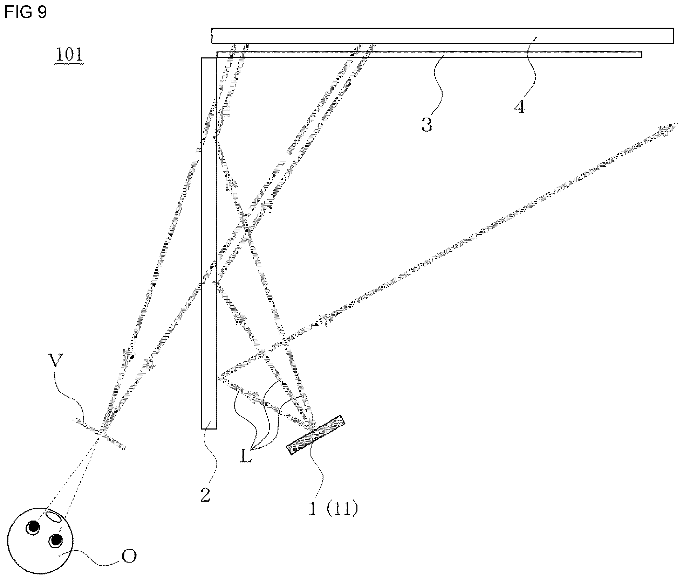

In addition, although the angles between the respective planes of the polarizer 2, the phase difference element 3, and the recursive light reflector 4 may be optional, as illustrated in FIG. 9, when the angle between the polarizer 2 and the recursive light reflector 4 becomes large, the light that can be recursively reflected decreases, and thus the viewing angle of the image to be formed and the brightness thereof decrease. In order to prevent the viewing angle and the brightness from decreasing, it is necessary to enlarge the recursive light reflector 4. Hence, it is preferable that the angle between the polarizer 2 and the recursive light reflector 4 should be as small as possible. For example, it is preferable that such an angle should be equal to or smaller than 45 degrees, preferably, equal to or smaller than 40 degrees, and further preferably, equal to or smaller than 30 degrees. Still further, it is preferable that the phase difference element 3 and the recursive light reflector 4 should be formed in a size equal to or greater than at least the area of the polarizer 2.

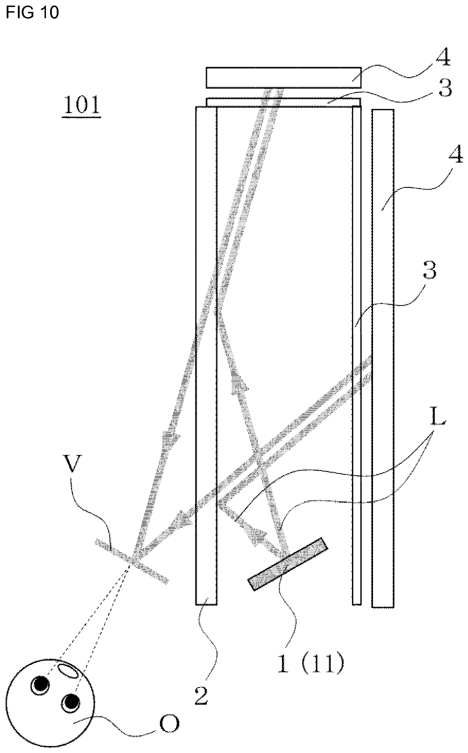

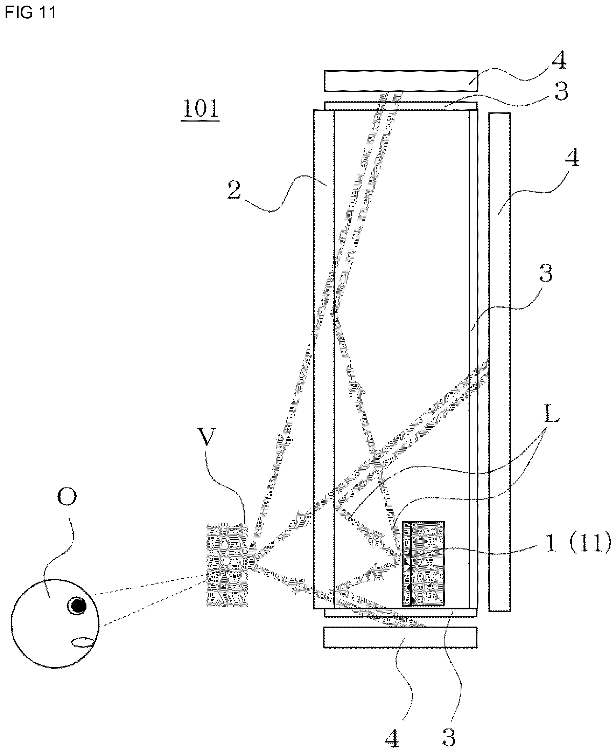

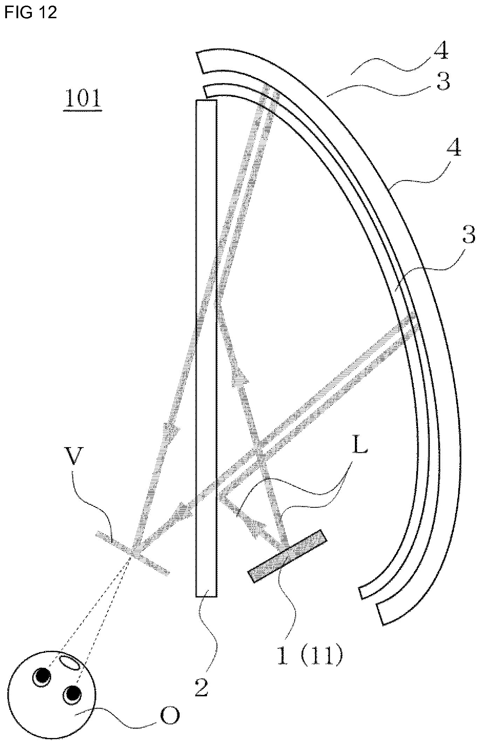

In addition, in the above description, although only a pair of the phase difference element 3 and the recursive light reflector 4 are applied at the projection-body-1 side of the polarizer 2 or the opposite side, multiple pairs of the phase difference element 3 and the recursive light reflector 4 with different angles may be applied. For example, multiple pairs of the phase difference element 3 and the recursive light reflector 4 may be disposed at the front side and back side of the projection body 1 as illustrated in FIG. 10, and at the upper side and lower side of the projection body as illustrated in FIG. 11. According to this structure, the light emitted from the light projecting means 11 in the back-and-forth direction and in the vertical direction can be utilized without a waste, and thus the viewing angle and brightness of the actual image V to be formed can be further improved. Still further, as illustrated in FIG. 12, the phase difference element 3 and the recursive light reflector 4 formed in a curved shape may be disposed. When, in particular, the incident angle at which the recursive light reflector 4 can recursively reflect the light has a limit, by forming the polarizer-2 side of the recursive light reflector 4 as a concave curved plane, it is preferable since the light can enter within the limit of the incident angle.

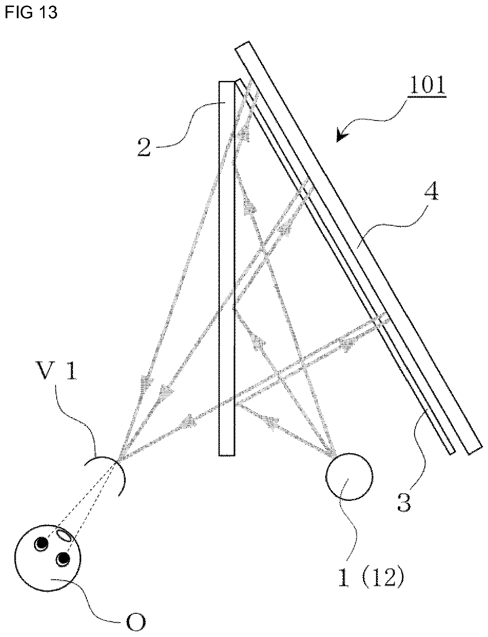

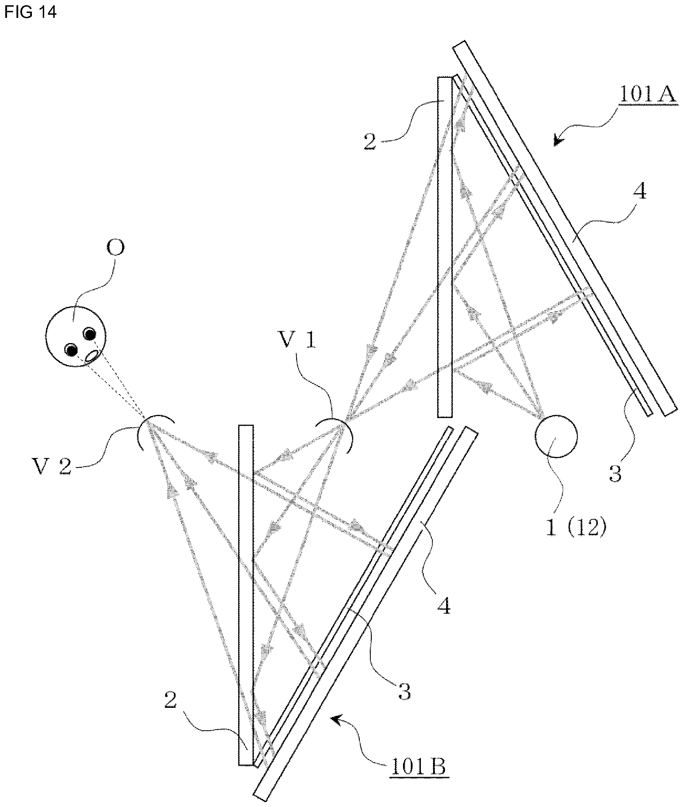

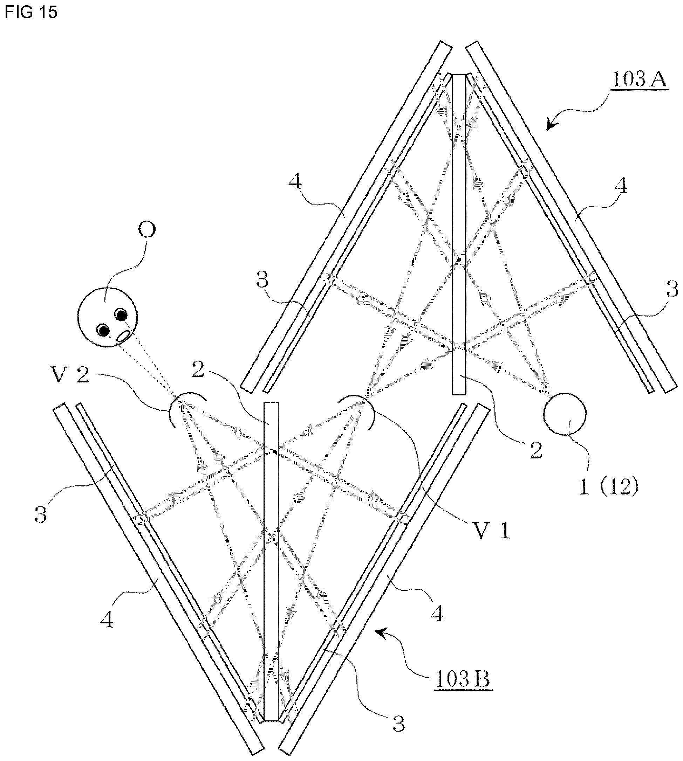

In the above description, although the case in which the light projecting means 11 that projects only linear polarization light is utilized as the projection body 1 has been described, a normal object 12 is also applicable as the projection body 1. When, however, the normal object 12 is applied, as illustrated in FIG. 13, an actual image V1 of the object 12 is seen by an observer in a manner such that the concavity and the convexity are inverted. Hence, in order to invert again the concavity and the convexity, it is necessary to form an actual image V2 of the actual image V1 by another optical image formation apparatus of the present disclosure. For example, as illustrated in FIG. 14, an optical image formation apparatus 101A that forms the actual image V1 of the projection body 1, and an optical image formation apparatus 101B that forms the actual image V2 of the actual image V1 may be combined. In addition, the light emitted from the object 12 is less intensive than the light emitted from light projecting means like a display. Hence, as illustrated in FIG. 15, it is preferable to combine the third optical image formation apparatus 103A of the present disclosure and an optical image formation apparatus 103B. Still further, it is preferable that the optical image formation apparatus of the present disclosure should include light emitting means that emits light to the projection body 1 in order to increase the intensity of the light emitted from the projection body 1. As for the light emitting means, for example, a general lighting apparatus is applicable.

Next, a simulation was carried out, and the efficiency of light utilization when the recursive light reflector that utilizes total reflection and the recursive light reflector that utilizes reflection by metal was calculated for the optical image formation apparatus. Softwares DiffractMOD and LightTools available from synopsis, Inc were applied for the simulation.

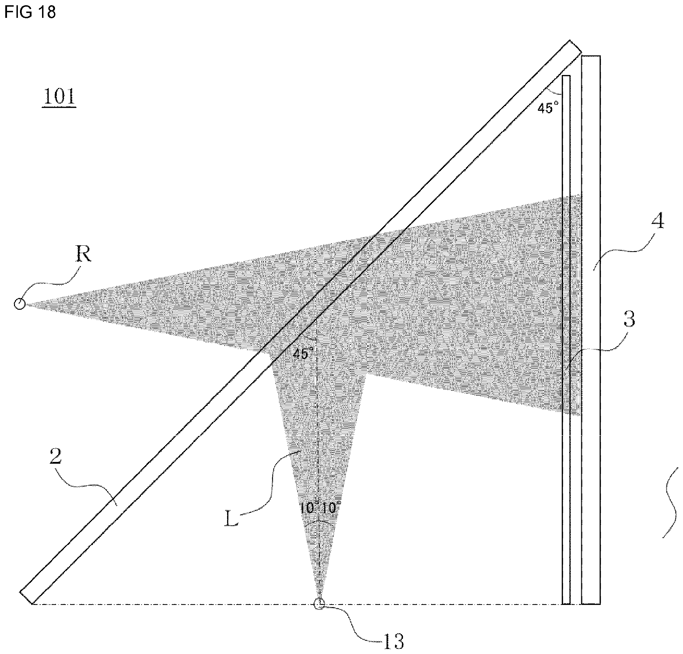

First, as for the optical image formation apparatus, as illustrated in FIG. 18, the first optical image formation apparatus 101 of the present disclosure which has the angle of the phase difference element 3 and that of the recursive light reflector 4 relative to the polarizer 2 which are 45 degrees were applied. As for the polarizer 2, a wire grid which allows P polarization light to pass through and which reflects S polarization light was assumed. The wire grid employed a structure in which convexities having a height of 200 nm and having a width of 50 nm were formed on a substrate formed of silicon dioxide (SiO₂) at a pitch of 100 nm, and the convexities were formed of a material that was aluminum. As for the phase difference element 3, one that gives a phase difference of 1/4 wavelength to passing light was assumed. As for the recursive light reflector 4, one that utilizes total reflection (first example), and one that utilizes reflection by metal (second example) were expected. As for the recursive light reflector that utilizes total reflection, a concavo-convex structure (first example) in which one surface of a plate formed of glass (SiO₂) is a plane and the multiple recursive reflection unit elements 40 in a corner cube shape as illustrated in FIG. 8 are disposed on the other surface was applied. In this case, a boundary between the glass and air was made as the mirror plane 45. In addition, as for the recursive light reflector that utilized reflection by metal, the mirror plane 45 of the recursive light reflector of the first example on which vapor deposition of silver (Ag) is applied was adopted. Still further, as for the corner cube, the one side thereof was set to be 0.1 mm, i.e., the length of two sides across the right angle of the mirror plane 45 which is an isosceles triangle was set to be 0.1 mm. As for the light source 13, as illustrated in FIG. 18, a point light source which emits light L that is S polarization light to the polarizer 2 at a spread angle of ±10 degrees was applied, and adjustment was made in such a way that the light L at 0 degree was emitted to the polarizer 2 at an angle of 45 degrees. The wavelength of light was set to be 550 nm. In addition, a receiver R was disposed at a position where light emitted from the light source 13 forms an image, and the ratio of an amount of received light by the receiver R relative to the amount of light emitted by the light source 13 was calculated.

Consequently, the amount of received light by the receiver R was 10.94 % in the first example, but the amount of received light was 27.18 % in the second example. This indicates that, in order to increase the brightness of a formed actual image, the recursive light reflector 4 that utilized reflection by metal can increase the brightness.

Note that the terms horizontal direction, back-and-forth direction, and vertical direction for the purpose of description in this specification, but those terms indicate relative directions to the optical image formation apparatus of the present disclosure, and when the direction of the optical image formation apparatus is changed, those directions also change accordingly.

### REFERENCE SIGNS LIST

- 1: Projection body
- 2: Polarizer
- 3: Phase difference element
- 4: Recursive light reflector
- 11: Light projecting means
- 12: Object
- 13: Light source
- 41: Recursive light reflector
- 42: Recursive light reflector
- 101: First optical image formation apparatus
- 101A: First optical image formation apparatus
- 101B: First optical image formation apparatus
- 102: Second optical image formation apparatus
- 103: Third optical image formation apparatus
- 103A: Third optical image formation apparatus
- 103B: Third optical image formation apparatus
- L: Light
- O: Observer
- R: Receiver
- V: Actual image
- V1: Actual image
- V2: Actual image

## Claims

1. An optical image formation apparatus that forms an actual image of a projection body, the optical image formation apparatus comprising:
a polarizer causing P polarization light to pass through, and reflecting S polarization light;
a phase difference element converting the P polarization light or the S polarization light into circular polarization light or elliptical polarization light; and
a recursive light reflector recursively reflecting the light having passed through the phase difference element.

2. The optical image formation apparatus according to claim 1, wherein the recursive light reflector utilizes reflection by metal.

3. The optical image formation apparatus according to claim 1 or 2, wherein the polarizer comprises a first plane and a second plane, causes the P polarization light of the light entering from the first plane to pass through, and reflects the S polarization light.

4. The optical image formation apparatus according to claim 1 or 2, wherein the polarizer comprises a first plane and a second plane, causes the P polarization light of the light entering from the first plane to pass through, and reflects the S polarization light of the light entering from the second plane.

5. The optical image formation apparatus according to claim 1 or 2, wherein:
the polarizer comprises a first plane and a second plane, causes the P polarization light of the light entering from the first plane to pass through, reflects the S polarization light, and reflects the S polarization light of the light entering from the second plane;
the phase difference element comprises a first phase difference element converting the S polarization light reflected by the polarizer into circular polarization light or elliptical polarization light, and a second phase difference element converting the P polarization light having passed through the polarizer into circular polarization light or elliptical polarization light; and
the recursive light reflector comprises a first recursive light reflector recursively reflecting the light having passed through the first phase difference element, and a second recursive light reflector recursively reflecting the light having passed through the second phase difference element.

6. The optical image formation apparatus according to any one of claims 1 to 5, wherein a polarizer side of the recursive light reflector is a concaved curved surface.

7. The optical image formation apparatus according to any one of claims 1 to 5, wherein a plurality of pairs of the phase difference element and the recursive light reflector having different angles are disposed.

8. The optical image formation apparatus according to claim 2, wherein the polarizer comprises, on the second plane, reflection suppressing means that suppresses reflection of light.

9. The optical image formation apparatus according to any one of claims 1 to 8, further comprising light projecting means that projects light to the polarizer.

10. The optical image formation apparatus according to claim 9, wherein the light projected by the light projecting means is linear polarization light.

11. The optical image formation apparatus according to claim 10, further comprising polarizer angle adjusting means rotating the light projecting means and the polarizer relative to each other, and adjusting a polarization direction of the light caused by the polarizer to pass through or reflected.

12. The optical image formation apparatus according to any one of claims 1 to 11, further comprising phase difference element angle adjusting means rotating the polarizer and the phase difference element relative to each other, and adjusting a polarization direction of the light to be entered in the phase difference element from the polarizer.

13. The optical image formation apparatus according to any one of claims 1 to 12, wherein the phase difference element and the recursive light reflector are formed in a size equal to or greater than a size of at least the polarizer.

14. An optical image formation apparatus comprising:
the optical image formation apparatus according to any one of claims 1 to 8, and forming an actual image of the projection body; and
the optical image formation apparatus according to any one of claims 1 to 8, and forming an actual image of the actual image.

15. The optical image formation apparatus according to claim 14, further comprising light emitting means that emits light to the projection body.
